# DEMANDE DE BREVET EUROPEEN

(11) **EP 1 020 622 A1**
(43) Date de publication de la demande: **19.07.2000**
(21) Numéro de dépôt: 00400090.7
(22) Date de dépôt: 14.01.2000
(51) Int. Cl.: F02B 31/00, F02F 1/42, F01L 1/26

(54) **Procédé de commande d'un moteur à combustion interne**

(30) Priorité: 15.01.1999 FR 9900373
(71) Demandeur: Renault, 92109 Boulogne Billancourt (FR)
(72) Inventeur: Desjardins, Georges, 92500 Rueil Malmaison (FR)
(74) Mandataire: Fernandez, Francis Lionel

(57) **Abrégé**

Procédé de commande d'un moteur à combustion interne, du type comportant au moins un cylindre dans lequel coulisse un piston, ce dernier délimitant, avec une culasse, une chambre de combustion dans laquelle débouchent, par des orifices appropriés, des conduits d'admission de l'air comburant ou du mélange carburé, et des conduits d'échappement pour évacuer les gaz brûlés, les orifices d'admission et d'échappement étant munis de soupapes manoeuvrées par des moyens de commande, au moins une partie desdits conduits étant adaptés pour générer, dans la chambre, lors de l'ouverture des soupapes correspondantes, un mouvement aérodynamique ordonné de type rotatif dont le sens de rotation s'inverse avec le sens de déplacement du piston dans le cylindre, caractérisé en ce que, dans des conditions de fonctionnement moteur prédéterminées, les ouvertures des soupapes d'au moins deux desdits conduits, adaptés pour générer un mouvement aérodynamique, sont opérées séquentiellement selon le sens de déplacement du piston pour contrôler le sens de rotation du mouvement aérodynamique dans la chambre, généré par les conduits correspondants.

## Description

La présente invention vise à générer mouvement aérodynamique ordonné dans la chambre de combustion d'un moteur à combustion interne.

Plus précisément, l'invention concerne un procédé de commande d'un moteur à combustion interne, du type comportant au moins un cylindre dans lequel coulisse un piston, ce dernier délimitant, avec une culasse, une chambre de combustion dans laquelle débouchent, par des orifices appropriés, des conduits d'admission de l'air comburant ou du mélange carburé, et des conduits d'échappement pour évacuer les gaz brûlés, les orifices d'admission et d'échappement étant munis de soupapes manoeuvrées par des moyens de commande, au moins une partie desdits conduits étant adaptés pour générer, dans la chambre, lors de l'ouverture des soupapes correspondantes, un mouvement aérodynamique ordonné de type rotatif dans le sens de rotation s'inverse avec le sens de déplacement du piston dans le cylindre

Il existe plusieurs types de mouvements aérodynamiques ordonnés pouvant être générés à l'intérieur d'une chambre de combustion d'un moteur. Le 〈〈 swirl 〉〉 est un mouvement aérodynamique ordonné dont l'axe moyen de rotation est sensiblement parallèle à l'axe du piston.

Un tel mouvement aérodynamique favorise la préparation du mélange air/carburant, et optimise la vitesse de combustion, améliorant la stabilité de la combustion et réduisant ainsi la consommation du moteur. En particulier, un tel mouvement aérodynamique permet de réduire la limite de fonctionnement en mélange pauvre ou dilué.

Habituellement, lorsque le moteur dispose de plusieurs soupapes d'admission et qu'il n'est pas nécessaire d'ouvrir toutes les soupapes d'admission lors de la phase d'admission, une façon d'obtenir un mouvement aérodynamique de type 〈〈 swirl 〉〉 est de fonctionner avec un seul conduit d'admission. La soupape correspondante est donc classiquement commandée une fois par cycle, tandis que les autres soupapes sont maintenues fermées. L'unique orifice d'admission d'air se trouve donc désaxé par rapport à l'axe de la chambre de combustion, ce qui tend à générer un mouvement aérodynamique de type 〈〈 swirl 〉〉.

Ce principe est utilisé avec des distributions variables mécaniques ou avec des volets disposés dans un des conduits d'admission.

Néanmoins, un tel procédé ne permet pas toujours d'obtenir un mouvement aérodynamique de type 〈〈 swirl 〉〉 très importante, et surtout ne permet de contrôler de façon précise ce type de mouvement aérodynamique. De plus, lorsque l'ouverture de toutes les soupapes d'admission est rendue nécessaire par le fonctionnement du moteur, ce procédé ne peut plus être utilisé. Finalement, les procédés existants n'utilisent pas les possibilités offertes par un système de commande sans came.

La présente invention répond à ces inconvénients. Dans ce but, elle propose un procédé de commande d'un moteur à combustion interne pour lequel, dans des conditions de fonctionnement moteur prédéterminées, les ouvertures des soupapes d'au moins deux des conduits d'échappement et d'admission, adaptés pour générer un mouvement aérodynamique, sont opérées séquentiellement selon le sens de déplacement du piston pour contrôler le sens de rotation du mouvement aérodynamique dans la chambre, généré par les conduits correspondants.

Selon une première possibilité de commande, les ouvertures des soupapes, d'au moins deux desdits conduits adaptés, sont opérées séquentiellement, selon le sens de déplacement du piston, pour que le sens du mouvement aérodynamique généré par les conduits correspondants soit toujours le même.

Selon une seconde possibilité de commande, les ouvertures des soupapes, d'au moins deux desdits conduits adaptés, sont opérées séquentiellement, selon le sens de déplacement du piston, pour que le sens du mouvement aérodynamique généré par les conduits correspondants soit alternativement de sens opposé.

D'autres caractéristiques et avantages de l'invention apparaîtront à la lecture de la description qui va suivre d'un mode de réalisation, donné à titre d'exemple non limitatif, en référence aux dessins annexés dans lesquels :
La figure 1 représente une vue schématique de dessous de la partie de la culasse recouvrant la chambre de combustion d'un moteur adapté à la mise en oeuvre du procédé objet de la présente invention.
La figure 2 représente une séquence d'ouverture des soupapes d'admission.
La figure 3 représente une séquence d'ouverture des soupapes d'échappement.
La figure 4 représente une séquence d'ouverture des soupapes d'admission et d'échappement.
La figure 5 représente une autre séquence d'ouverture des soupapes d'admission et d'échappement.
La figure 6 représente une séquence d'ouverture réelle des soupapes d'admission.

Nous considérons un des cylindres d'un moteur à combustion interne, dans lequel coulisse un piston. Ce piston délimite, avec une culasse, une chambre de combustion dans laquelle débouchent des conduits d'admission et d'évacuation, dont les orifices sont fermés par des soupapes. On appelle D l'axe du piston. Le système de commande des soupapes est adapté pour permettre de faire varier les instants de début et de fin d'ouverture des soupapes. Dans le présent exemple, ce système est de type électromagnétique. Les ouvertures et les fermetures des soupapes sont commandées indépendamment les unes des autres par une unité de traitement tel qu'un calculateur électronique.

L'agencement des conduits d'admission et d'échappement et des orifices correspondants est tel que, lors de l'ouverture des soupapes correspondantes, un mouvement aérodynamique ordonné de type rotatif, ou swirl, se crée dans la chambre de combustion dont le sens de rotation s'inverse lorsque le piston passe d'un mouvement ascendant à un mouvement descendant, et inversement.

Dans la description suivante, on considérera un cylindre contenant deux conduits d'admission et deux conduits d'échappement. Cependant, il est possible de concevoir un piston avec un nombre différent de conduits d'admission et d'échappement, utilisant le même principe que celui décrit dans la présente invention.

Nous considérons, par la suite, que les mouvements de type 〈〈 swirl 〉〉 générés par les deux conduits d'admission lors d'un même déplacement du piston sont opposés. Il en est de même pour les deux conduits d'échappement.

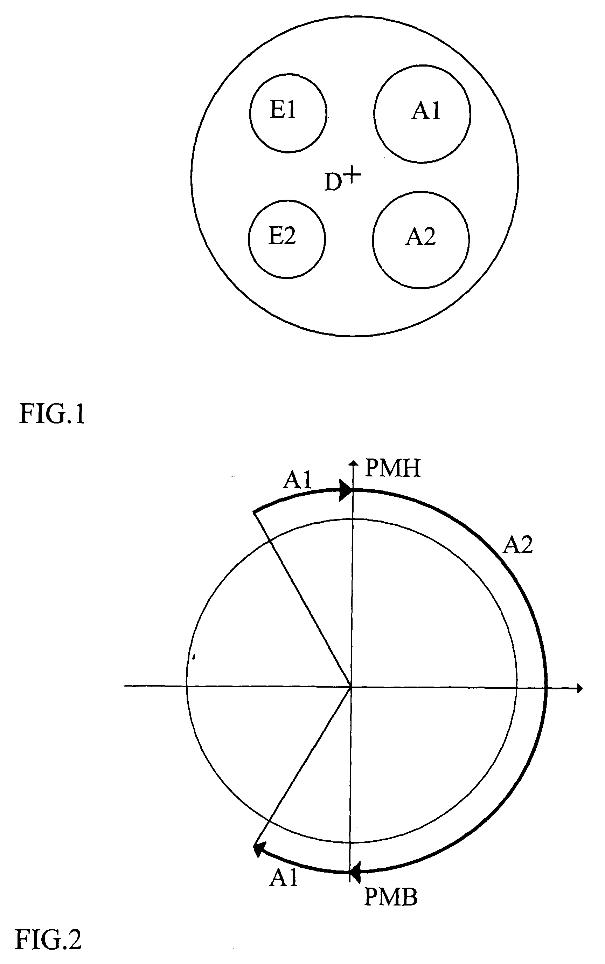

La figure 1 représente la paroi inférieure de la culasse, délimitant la chambre de combustion, avec les orifices des deux conduits d'admission A1 et A2 et les orifices des deux conduits d'échappement E1 et E2.

Dans une très large partie du fonctionnement recherché pour un moteur, les perméabilités obtenues par une marche en deux soupapes, au lieu de quatre, sont satisfaisantes. Nous allons donc, en premier lieu, nous intéresser à une commande de moteur, pour laquelle il n'est pas nécessaire que les deux soupapes d'admission soient ouvertes ensemble durant toute la phase d'admission, et réciproquement pour les deux soupapes d'échappement pendant la phase d'échappement.

La figure 2 représente un premier mode de réalisation de la présente invention faisant intervenir les soupapes d'admission. La référence PMH représente le point mort haut du piston et la référence PMB le point mort bas.

L'ouverture des soupapes d'admission est réalisée non pas simultanément, mais de façon séquentielle. La figure 2 représente une possibilité de séquence d'ouverture des soupapes d'admission. La soupape A1 est ouverte lorsque le piston est en phase ascendante (c'est-à-dire après le point mort bas PMB ou avant le point mort haut PMH). Sous l'action du piston, les gaz sont expulsés par l'orifice de la soupape A1, ce qui initialise un mouvement aérodynamique rotatif de type 〈〈 swirl 〉〉. Pour entretenir ce mouvement, au passage du point mort haut PMH, la soupape A1 est fermée, tandis que la soupape A2 est ouverte. Le piston étant descendant, les gaz sont aspirés par l'orifice de la soupape A2 et le mouvement aérodynamique est maintenu, voire amplifié.

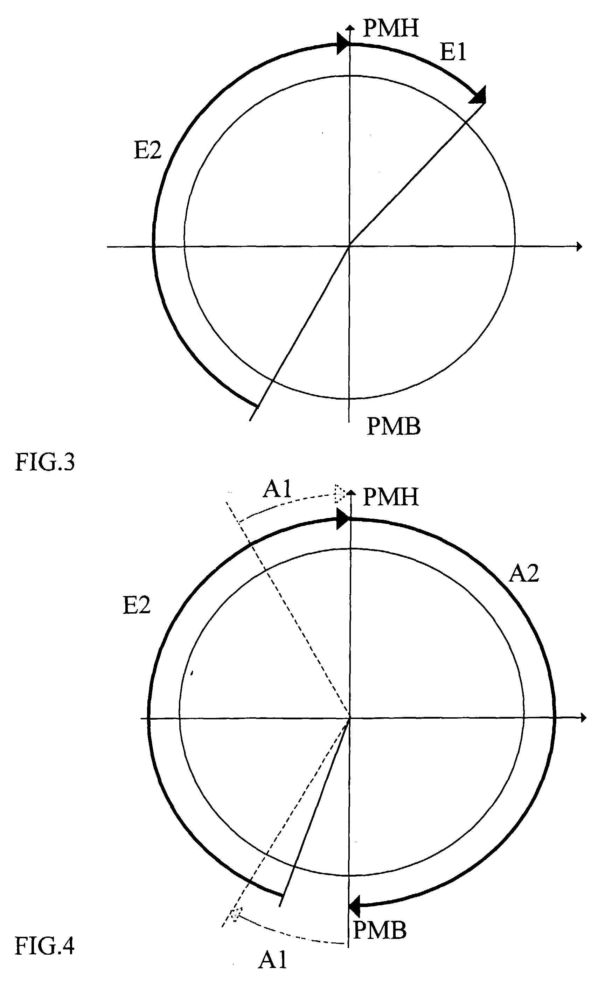

Un autre mode de réalisation de la présente invention consiste à utiliser les soupapes d'échappement pour initier le mouvement aérodynamique rotatif La figure 3 représente une loi d'ouverture des soupapes pour un tel mode de réalisation.

De la même façon, les soupapes d'échappement sont ouvertes l'une après l'autre suivant le mouvement du piston. La soupape d'échappement E2 est ouverte peu avant ou après le point mort bas PMB est reste ouverte pendant la phase ascendante du piston jusqu'au point mort haut PMH. Les gaz s'échappent, sous la pression du piston, par cet orifice, générant un mouvement aérodynamique de type 〈〈 swirl 〉〉.

Dans l'hypothèse où la fermeture se prolonge après le point mort haut PMH, à ce moment, la soupape E2 se ferme, tandis que la soupape E1 s'ouvre. Le piston étant descendant, les gaz sont aspirés par l'orifice de la soupape E2. Le mouvement aérodynamique de type 〈〈 swirl 〉〉 est donc maintenu, voire amplifié.

L'enchaînement des séquences d'ouverture des soupapes d'admission ou d'échappement peut se faire selon deux modes différents suivant que l'on veut accompagner le mouvement aérodynamique amorcé, ou au contraire contrarier son évolution. Supposons, par exemple, que la soupape E2 ait initié le mouvement aérodynamique pendant l'essentiel de la phase ascendante du piston, la soupape E1 pouvant, éventuellement, s'ouvrir après le point mort haut comme sur la figure 3.

Ensuite, comme le montre la figure 4, en choisissant de démarrer la phase de remplissage de la charge fraîche (lorsque le piston est descendant) par la soupape d'admission A2, qui est contiguë avec la soupape E2, le sens de rotation de la masse est conservé, et l'amplitude de la rotation sera maximale. Nous appelons ce choix le mode [a].

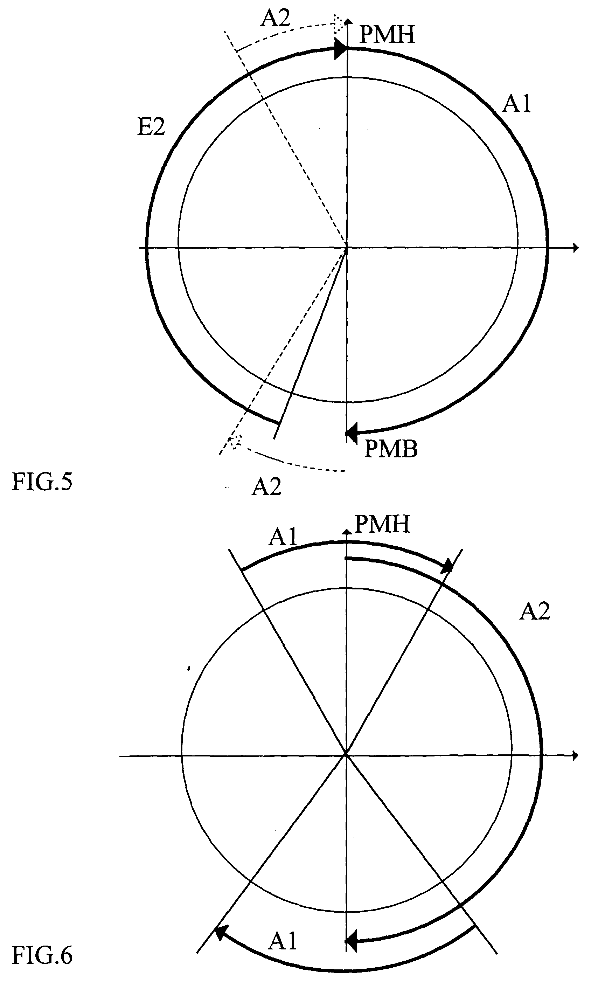

Si, au contraire, conune le montre la figure 5, on choisit de démarrer la phase de remplissage de la charge fraîche, cette fois ci, avec la soupape A1, qui est en quinconce avec la soupape E2, les sens de rotation des masses gazeuses générées par les deux soupapes seront antagonistes. L'amplitude de la rotation restera faible, mais on obtiendra en contre partie un brassage efficace entre les masses de gaz brûlés et les gaz frais, et entre l'air et l'essence. Ceci permet d'homogénéiser le mélange. Nous appelons ce choix le mode [b].

Les pointillés représentés sur les figures 4 et 5 montrent que l'on peut utiliser les séquencements décrits aux figures 2 et 3, et ce, afin d'amplifier encore davantage le premier mode [a] (figure 4) ou au contraire pour favoriser un brassage maximale pour le deuxième mode [b] (figure 5).

Selon les points de fonctionnements moteur utilisés, chacun des deux modes décrits ci-dessus peut avoir son intérêt sur la combustion ou sur la préparation du mélange.

De par la nature d'un système sans came ou de distribution variable, les modes de réalisation précédents prévoyants des ouvertures séquentiels sont plutôt théoriques. En effet, il est difficile d'éviter un croisement entre les soupapes, notamment entre les deux soupapes d'admission. Cela est dû au fait que l'ouverture d'une soupape nécessite un temps minimal qui peut être supérieur (suivant le régime moteur) à un quart de tour (ce qui correspond à 90° sur les lois d'ouverture représentées aux figures 2,3,4,5,6). On obtiendra donc une loi d'ouverture des soupapes qui, pratiquement, sera proche de celle représentée sur la figure 6 alors que la loi recherchée était celle représentée sur la figure 1. Pendant la durée de recouvrement des soupapes, il n'y a plus de génération de mouvement aérodynamique de type 〈〈 swirl 〉〉.

Ce recouvrement des soupapes peut être géré et être utilisé pour régler le niveau de mouvement aérodynamique de type 〈〈 swirl 〉〉 souhaité, Ainsi, les durées de recouvrement seront plus ou moins étendues suivant le niveau de mouvement aérodynamique de type 〈〈 swirl 〉〉 souhaité, ce niveau étant fonction du remplissage, de la recirculation des gaz brûlés, ou encore de la stratification du mélange souhaités.

Les modes [a] et [b] s'adaptent bien avec une stratégie de contrôle de la charge nécessitant des étalements d'ouverture globale supérieurs au demi-tour.

Ce qui est le cas, par exemple, sur les figures 2 ou 6.

Quand, au contraire, on utilise un contrôle de charge par une fermeture d'admission anticipée, l'étalement devient inférieur au demi tour à l'admission. Le basculement de la soupape A2 à la soupape A1 ne peut plus avoir lieu comme sur la figure 2. Si, toutefois, on souhaite maintenir un tel basculement, celui-ci ne peut se faire qu'en pleine descente du piston. Il n'est alors plus possible d'amplifier la turbulence de type 〈〈 swirl 〉〉. Par contre, on obtient un phénomène similaire à celui décrit dans le mode [b], par contre rotation des deux moitiés de la charge. On peut imaginer un séquencement similaire à l'enchaînement des deux soupapes E2 et E1 si l'étalement de fermeture est inférieur au demi tour à l'échappement. Ce troisième mode est appelé mode [c].

Il est possible de combiner ces différents modes, c'est-à-dire amplifier le mouvement de rotation à l'enchaînement échappement admission, mode [a], alors que l'on a favorisé le brassage à l'enchaînement entre le deux soupapes d'admission, mode [c], ou respectivement d'échappement.

D'un cycle à l'autre, il est possible de permuter le choix des soupapes initiant le mouvement aérodynamique si l'on redoute, par exemple, les accumulations de carburant dans les conduits.

Une variante de l'invention consiste à combiner ces différentes stratégies avec des conduits d'admission, ou d'échappement agencés de façon à favoriser la création de mouvement aérodynamique de type 〈〈 swirl 〉〉, ou comportant des moyens susceptibles de remplir la même fonction.

Dans certaines parties de fonctionnement du moteur, il n'est plus possible de se priver d'un conduit d'admission pour obtenir le remplissage souhaité de la chambre de combustion. Il est toutefois encore possible de créer un mouvement aérodynamique de type 〈〈 swirl 〉〉 en utilisant le même principe de déphasage des ouvertures ou fermetures des soupapes que celui représenté à la figure 6. Les périodes pendant lesquelles les soupapes d'admission sont toutes les deux ouvertes ne sont pas génératrices de mouvement aérodynamique de type 〈〈 swirl 〉〉. Au contraire, les périodes en fin d'ouverture ou de fermeture des soupapes, où une seule soupape d'admission est ouverte, créent une dissymétrie de la charge admise et donc favorisent le développement d'un mouvement aérodynamique de type 〈〈 swirl 〉〉.

Nous avons considéré que les mouvements de type 〈〈 swirl 〉〉 générés par les deux conduits d'admission, lors d'un même déplacement du piston, étaient opposés et qu'il en était de même pour les deux conduits d'échappement.

Il est possible d'envisager la situation contraire. La forme des conduits, ou l'ajout de dispositifs à ceux-ci, peut faire que les mouvements de type 〈〈 swirl 〉〉 générés par les deux conduits d'admission, lors d'un même déplacement du piston, soient de même sens. Il peut en être de même pour les conduits d'échappement.

Dans un tel cas, pour favoriser le développement d'un mouvement aérodynamique de type 〈〈 swirl 〉〉, il est nécessaire d'ouvrir les soupapes des deux conduits d'admission (ou d'échappement) lors d'un même déplacement, ascendant ou descendant, du piston. Pendant ce même déplacement du piston, l'ouverture des deux soupapes peut être concomitantes ou bien successives, suivant le fonctionnement du moteur, ou bien suivant l'intensité du mouvement de type 〈〈 swirl 〉〉 à laquelle on veut parvenir.

Par contre si l'on souhaite diminuer l'intensité du mouvement de type 〈〈 swirl 〉〉, il sera nécessaire d'ouvrir les deux soupapes d'admission (ou d'échappement) séparément, lors de deux phases de mouvement du piston différentes.

En conclusion, une commande des soupapes selon la présente invention par un système sans came permet un contrôle du mouvement aérodynamique de type 〈〈 swirl 〉〉 en favorisant ou empêchant, suivant les besoins, la mise en rotation des gaz dans la chambre de combustion.

## Revendications

1. Procédé de commande d'un moteur à combustion interne, du type comportant au moins un cylindre dans lequel coulisse un piston, ce dernier délimitant, avec une culasse, une chambre de combustion dans laquelle débouchent, par des orifices appropriés, des conduits d'admission de l'air comburant ou du mélange carburé, et des conduits d'échappement pour évacuer les gaz brûlés, les orifices d'admission et d'échappement étant munis de soupapes manoeuvrées par des moyens de commande, au moins une partie desdits conduits étant adaptés pour générer, dans la chambre, lors de l'ouverture des soupapes correspondantes, un mouvement aérodynamique ordonné de type rotatif dont le sens de rotation s'inverse avec le sens de déplacement du piston dans le cylindre, caractérisé en ce que, dans des conditions de fonctionnement moteur prédéterminées, les ouvertures des soupapes d'au moins deux desdits conduits, adaptés pour générer un mouvement aérodynamique, sont opérées séquentiellement selon le sens de déplacement du piston pour contrôler le sens de rotation du mouvement aérodynamique dans la chambre, généré par les conduits correspondants.

2. Procédé de commande d'un moteur à combustion interne selon la revendication 1, caractérisé en ce que les ouvertures des soupapes, d'au moins deux desdits conduits adaptés, sont opérées séquentiellement, selon le sens de déplacement du piston, pour que le sens du mouvement aérodynamique généré par les conduits correspondants soit toujours le même.

3. Procédé de commande d'un moteur à combustion interne selon la revendication 2, caractérisé en ce qu'il comporte un premier conduit d'admission générant un mouvement rotatif dans un sens lors du mouvement descendant du piston, et un second conduit d'admission générant un mouvement rotatif dans le sens opposé lors du mouvement descendant du piston, et que l'ouverture de la première soupape d'admission est opérée principalement lors du mouvement ascendant du piston tandis que l'ouverture de la seconde soupape d'admission est opérée principalement lors du mouvement descendant du piston.

4. Procédé de commande d'un moteur à combustion interne selon la revendication 2, caractérisé en ce qu'il comporte deux conduits d'admission générant un mouvement rotatif de même sens lors d'un même déplacement du piston et que l'ouverture des deux conduits d'admission est opérée principalement lors d'un même déplacement du piston.

5. Procédé de commande d'un moteur à combustion interne selon l'une quelconque des revendications 2 à 4, caractérisé en ce qu'il comporte un premier conduit d'échappement générant un mouvement rotatif dans un sens lors du mouvement ascendant du piston, et un second conduit d'échappement générant un mouvement rotatif dans le sens opposé lors du mouvement ascendant du piston, et que l'ouverture de la première soupape d'échappement est opérée principalement lors du mouvement descendant du piston tandis que l'ouverture de la seconde soupape d'échappement est opérée principalement lors du mouvement ascendant du piston.

6. Procédé de commande d'un moteur à combustion selon l'une quelconque des revendications 2 à 4, caractérisé en ce qu'il comporte deux conduits d'échappement générant un mouvement rotatif de même sens lors d'un même déplacement du piston et que l'ouverture des deux conduits d'échappement est opérée principalement lors d'un même déplacement du piston.

7. Procédé de commande d'un moteur à combustion interne selon l'une quelconque des revendications 2 à 6, caractérisé en ce qu'il comporte un conduit d'échappement générant un mouvement rotatif dans un sens lors du mouvement ascendant du piston, et un conduit d'admission générant un mouvement rotatif dans le sens opposé lors du mouvement ascendant du piston, et que l'ouverture de la soupape d'échappement est opérée principalement lors du mouvement ascendant du piston tandis que l'ouverture de la soupape d'admission est opérée principalement lors du mouvement descendant du piston.

8. Procédé de commande d'un moteur à combustion interne selon la revendication 1, caractérisé en ce que les ouvertures des soupapes, d'au moins deux desdits conduits adaptés, sont opérées séquentiellement, selon le sens de déplacement du piston, pour que le sens du mouvement aérodynamique généré par les conduits correspondants soit alternativement de sens opposé.

9. Procédé de commande d'un moteur à combustion interne selon la revendication 8, caractérisé en ce qu'il comporte un premier conduit d'admission générant un mouvement rotatif dans un sens lors du mouvement descendant du piston, et un second conduit d'admission générant un mouvement rotatif dans le sens opposé lors du mouvement descendant du piston, et que l'ouverture des deux conduits d'admission est opérée principalement lors d'un même déplacement du piston.

10. Procédé de commande d'un moteur à combustion interne selon la revendication 8, caractérisé en ce qu'il comporte deux conduits d'admission générant un mouvement rotatif de même sens lors d'un même déplacement du piston, et que l'ouverture de la première soupape d'admission est opérée principalement lors du mouvement ascendant du piston tandis que l'ouverture de la seconde soupape d'admission est opérée principalement lors du mouvement descendant du piston.

11. Procédé de commande d'un moteur à combustion interne selon la revendication 8 à 10, caractérisé en ce qu'il comporte un premier conduit d'échappement générant un mouvement rotatif dans un sens lors du mouvement ascendant du piston, et un second conduit d'échappement générant un mouvement rotatif dans le sens opposé lors du mouvement ascendant du piston, et que l'ouverture des deux conduits d'échappement est opérée principalement lors d'un même déplacement du piston..

12. Procédé de commande d'un moteur à combustion interne selon la revendication 8 à 10, caractérisé en ce qu'il comporte deux conduits d'échappement générant un mouvement rotatif de même sens lors d'un même déplacement du piston, et que l'ouverture de la première soupape d'échappement est opérée principalement lors du mouvement descendant du piston tandis que l'ouverture de la seconde soupape d'échappement est opérée principalement lors du mouvement ascendant du piston.

13. Procédé de commande d'un moteur à combustion interne selon l'une quelconque des revendications 8 à 12, caractérisé en ce qu'il comporte un conduit d'échappement et un conduit d'admission générant un mouvement rotatif dans un même sens lors du mouvement ascendant du piston, et que l'ouverture de la soupape d'échappement est opérée principalement lors du mouvement ascendant du piston tandis que l'ouverture de la soupape d'admission est opérée principalement lors du mouvement descendant du piston.
